# EUROPEAN PATENT SPECIFICATION

(11) **EP 2 462 678 B1**
(45) Date of publication and mention of the grant of the patent: **09.06.2021**
(21) Application number: 10738021.4
(22) Date of filing: 27.07.2010
(51) Int. Cl.: H02J 7/00

(54) **A METHOD AND APPARATUS FOR CHARGING A BATTERY**
VERFAHREN UND VORRICHTUNG ZUR LADUNG EINER BATTERIE
PROCÉDÉ ET APPAREIL POUR LA CHARGE D'UN ACCUMULATEUR

(30) Priority: 06.08.2009 GB 0913769
(43) Date of publication of application: 13.06.2012
(73) Proprietor: EH Europe GmbH, 8001 Zürich (CH)
(72) Inventor: EVANS, Rhodri, Monmouthshire NP15 1HG (GB); COLDRICK, Wayne, Newport NP20 7XU (GB)
(74) Representative: Abel & Imray
(86) International application number: PCT/GB2010/001429
(87) International publication number: WO 2011/015806

(56) References cited:
- EP-A1- 1 455 194
- EP-A2- 0 711 016
- CN-A- 1 327 287
- GB-A- 2 147 161
- US-A- 4 387 334
- US-A1- 2009 033 277

## Description

The present invention relates to methods of operating and charging a lead acid battery, to an apparatus for charging a lead acid battery and to an energy storage system comprising lead acid batteries and a charging apparatus.

In recent years many advances have been made to improve the efficiency and reliability of lead acid batteries. During the lifetime of a lead acid battery it will typically be discharged and charged many times. This is especially true in motive power applications such as forklift trucks, golf buggies and other battery powered vehicles including battery powered cleaning and polishing machines where the battery regularly is discharged during one period, for example, during the day and is charged in another period, for example, overnight. Even in some reserve power applications, for example, reserve power supplies for telecommunication systems, there may be a significant degree of cycling between a partially or fully discharged state and a charged state, for example, in locations where disruptions of the main power supply are frequent. During the cyclical discharging and charging of the battery side reactions occur which waste some of the power supplied to charge the battery and which also gradually cause changes in the battery electrochemistry and materials resulting in eventual failure of the battery.

Battery charging systems can be categorised in three main groups. In the first group, referred to as "constant voltage systems", the charging system applies a constant voltage per cell. At the commencement of charging the current flow will be high, often at the peak value, (assuming the battery is in a state of significant discharge) and is often deliberately limited by the charging system in order to avoid damage to the battery. As the battery approaches full charge, the equilibrium/rest voltage of the battery increases and the difference between that "at rest" voltage and the voltage applied by the charging systems decreases, thereby causing the current flowing into the battery to fall also. In the second type of system, known as "constant current" systems, the control algorithm of the charging system continuously adjusts the voltage per cell applied to the battery in order to maintain the current into the battery at a set level. The third type of system is essentially a hybrid of the first two, and can be referred to as a "hybrid system". In such a hybrid system the charging algorithm typically applies a constant voltage regime first until the battery is mostly charged and then switches to a constant current regime for a set period of time. Some hybrid systems have more complex algorithms which apply a number of phases of constant current and constant voltage, according to a pre determined routine. Other charging systems are also known, such as pulse charging. The charging systems are typically controlled by a microprocessor which operates according to an algorithm. Charging systems of all types often also include a sensor for measuring the temperature of the battery, and the algorithm may be designed to adjust the charging voltage/current according to the measured temperature. Charging systems are typically dedicated to a particular type of battery and are sold by the battery manufacturer together with the batteries as a package.

Recently, systems have come on the market in which each battery is provided with a device fitted to the main DC cable of the battery to monitor and record data of current, voltage, (potential difference), temperature and, optionally, electrolyte level. That data can be wirelessly downloaded to the charging station when the battery is brought to the station for charge, thereby giving the system operator useful information relating to the utilisation of the battery and also advising the user of any faults. One such system is the WI-IQ wireless battery monitoring device available from EnerSys Inc.

GB2147161A discloses a microprocessor based monitoring/charging system for the traction battery of an electric vehicle. EP 1455194A1 discloses apparatus for charging a battery cell. CN1327287A discloses a rectified power source having step regulated cell charging voltage.

However, there remains a need to improve the lifetime cyclic capability and reliability of lead acid batteries.

In mitigation of that need, the present invention provides a method according to claim 1.

In a separate aspect the invention provides an apparatus for charging a lead acid battery according to claim 8.

In a yet further aspect the invention provides an energy storage and supply apparatus according to claim 13.

The present inventors have found that the working lifetime of a lead acid battery can be significantly extended if the voltage applied during charging is controlled at least in part in dependence on the history of the battery, in particular, the discharging and/or charging history of the battery over its lifetime, in order to control the charge returned to the battery. The control of the voltage typically involves selecting a voltage to be applied to the battery during charging. Thus, by varying the voltage applied to the battery during charging according to where the battery is in its working lifetime side reactions occurring during charging of the battery may be reduced, thereby extending the working lifetime of the battery. The invention is applicable to any charging system which applies a set voltage during the whole or part of the charging phase. The invention is particularly applicable to constant voltage systems and hybrid systems. In the latter type of system, the voltage applied during the constant voltage portions of the charging phase is controlled in accordance with the method of the invention.

During the working life of a lead acid battery in a motive power application, for example, a forklift truck battery, the battery will be at least partially discharged during operation of the forklift truck. When the charge in the battery drops to a certain level, say to around 20% of the capacity of the battery (which corresponds to the depth-of-discharge, or DOD, of 80%), the battery will be in need of charging and the operator will therefore take it to a charging station where it can be connected to a charging apparatus and charged. Once charged, the battery is fit for use again. Over the lifetime of the battery this cycling between discharged and charged states occurs many times. For example, a battery having a total charge capacity of 100 Amp hours might be specified by the manufacturer to give 600 discharge/charge cycles at a level of 80% depth-of-discharge. The total intended energy capacity over the battery over its working lifetime can be calculated as 100 Amp hours x 0.80 x 600 which equals in total 48,000 Amp hours.

During charging of the battery a voltage is applied to the battery which must obviously be greater than the voltage generated by the battery in order to reverse the chemical reactions which occur in the battery during the discharging phase. For example, for a lead acid battery which operates at a nominal discharge voltage of 2.0 Volts per cell the charging apparatus may apply a charging voltage of say 2.4 Volts per cell.

As mentioned above, in some systems the temperature of the battery is continuously monitored and the charging apparatus controls the voltage applied to the battery in order to take account of that temperature so that the charging voltage applied is the optimum for the particular type of battery at that temperature.

As a battery is charged the current flowing into the battery will typically gradually reduce even though the voltage applied is held substantially constant until, as the battery approaches a full level of charge, the current flow tends to level out to a final value. The current into the battery at the point where the battery is substantially fully charged is known as the end of charge current. The present inventors have found that by controlling the voltage applied during charging in dependence on the discharging/charging history of the battery the working lifetime of the battery can be extended.

The information relating to the discharging and/or charging history of the battery may relate, for example, to the discharging history of the battery over its lifetime or may relate to the charging history of the battery over its lifetime or may relate to both the discharging and the charging history of the battery over its lifetime. The information may relate, for example, to the total amount of charge which has been discharged from the battery. Alternatively, the information may relate, for example, to the total amount of charge which has been supplied to the battery during charging phases. Optionally, the information relates to the number of discharge phases the battery has experienced. Optionally, the information relates to the number of charge phases the battery has experienced.

In a preferred embodiment the voltage applied to the battery during charging is adjusted in dependence on recorded information relating to the discharging and/or charging history of the battery such that the voltage applied to the battery during charging phases progressively reduces over the lifetime of the battery. The voltage applied to the battery must not be reduced below the minimum voltage required to input charge into the battery, which is typically around 2.21 Volts per cell. The initial voltage applied during the first charging phase the battery experiences will typically be substantially higher than that minimum voltage in order that the battery be charged within a reasonable time frame. For example, the voltage applied to the battery during the initial charging phase may be in the region of 2.25 to 2.60 Volts per cell, for example, within the range of 2.35 to 2.50 Volts per cell, and especially preferably may be in the range from 2.35 to 2.45 Volts per cell depending on the specific lead acid chemistry involved. The selection of the Voltage may also be influenced by the ambient temperature of the battery. The voltage applied to the battery during charging phases is optionally reduced continuously over the lifetime of the battery. Optionally, the voltage applied to the battery during charging phases is reduced stepwise over the lifetime of the battery.

Optionally, the information relating to the discharging and/or charging history of the battery relates to at least one parameter relating to the discharging and/or charging history of the battery, and the voltage applied to the battery is adjusted such that it reduces stepwise at predetermined values of the parameter. For example, the parameter may be the total charge applied to the battery during previous charging phases. As an illustration, a battery of the type mentioned above having an intended total energy capacity over its planned lifetime of 48,000 Amp hours may have experienced 150 charging phases receiving on average 80 Amp hours during each charge phase, making a total charge supplied to the battery of 80 Amp hours x 150 = 12,000 Amp hours. The battery would therefore be 25% of the way through its intended lifetime.

The extent of each stepwise reduction and the number of stepwise reductions made over the lifetime of the battery may vary over a wide range, always bearing in mind the need to keep the voltage per cell applied to the battery at a level which will achieve charging of the battery at a practicable time. The minimum stepwise reduction which it is feasible to apply will be determined in practice by the minimum voltage change which can be sensed by the system. The or each step change in voltage may be, for example, in the region of from 1 to 50 millivolts per cell, optionally from 1 to 30 millivolts per cell, preferably in the range of from 2 to 20 millivolts per cell, and more preferably in the range of from 2 to 10 millivolts per cell. The number of step changes applied over the lifetime of the battery will be preferably at least two and may, for example, be in the range of from 2 to 20, more preferably in the range of from 5 to 15. The steps may be at regular intervals or irregular intervals. Preferably, they are at regular intervals. For example, the method may involve reducing the charging voltage applied to the battery by a level in the range from 1 to 50 millivolts per cell, more preferably from 2 to 30 millivolts per cell, at regular intervals in the range of from 2 to 20% of the intended total energy planned for the battery over its planned lifetime. Put another way, in one embodiment when the total energy supplied to or discharged from the battery reaches a percentage which is in the range of from 2 to 20% of its intended total energy capacity, or a multiple of that percentage, the voltage applied during charging may be reduced by an amount in the range of from 1 to 50 millivolts per cell, preferably from 2 to 30 millivolts per cell. For example, for a battery having a total planned energy capacity over its lifetime of 48,000 Amp hours the method may involve reducing the voltage applied during charging by 10 millivolts per cell every time the total charge supplied to the battery during charging reaches 4800 Amp hours (10% of the intended lifetime of the battery) or a multiple thereof.

References herein to discharging or charging a battery should not be taken to imply that the battery is completely discharged or completely charged, unless the context makes it clear that is the intended meaning. In fact, batteries are typically discharged to a depth-of-discharge of less than 100%, for example, to less than 80%, in order to avoid damage to the battery.

The method of the invention does not require that the battery be fully charged during a charging phase, as it may be desirable for operational reasons to cut the charging short.

Some battery operated vehicles have braking systems which generate current which is fed to the battery during operation of the battery on the vehicle, thereby improving energy efficiency. Such braking systems are not regarded as "charging apparatus" as that term is used herein. In such systems, the current flow back to the battery from the braking system will also be monitored so that the true depth-of-discharge of the battery may be calculated.

It is within the scope of the invention to apply to the battery occasional charges in which the voltage is not adjusted in accordance with the method of the invention. For example, an equalisation charge, which is an 'extra' charge periodically applied with the aim of equalising the state of charge of the cells in a string, may be applied to the battery. Such equalisation charges are not regarded as "charging phases" as that term is used herein.

It will be appreciated that references herein to adjusting or controlling the voltage applied to the battery during charging in dependence on information relating to the discharging and/or charging history of the battery should not be taken to imply that the voltage is controlled solely with reference to that information. In many cases the actual voltage applied to the battery during charging will be controlled in accordance with several different criteria of which the information relating to the discharging and/or charging history of the battery is only one. Such other criteria will typically include a current limit and the battery temperature. Furthermore, when the charging system applies a current limit during the early part of the charging phase, the current flowing into that battery will typically be at that limit (assuming the battery is at a significant depth-of-discharge) and so during that part of the charging phase the adjustment of the voltage in dependence on the information relating to the discharging and/or charging history of the battery will typically have no effect on the current flow. As the battery approaches full charge the current supply to the battery will typically reduce well below the current limit. The adjustment of the voltage in dependence on the information relating to the discharging and/or charging history of the battery will therefore have most effect during that latter part of the charging cycle.

The method may also involve measuring the temperature of the battery during the charging of the battery and adjusting the voltage applied to the battery in dependence on that temperature.

Accordingly, the actual voltage applied to the battery at any moment during a charge cycle will typically be controlled by one or more factors of which the information relating to the discharging and/or charging history of the battery is only one. The important thing is that if all of the other factors are equal (for example, assuming that any current limit does not apply and assuming equal temperatures) the voltage applied to the battery will be changed in dependence on that information, for example, to reduce the voltage applied during charging as the battery passes through its working lifetime.

The method of the invention may involve the steps of i) providing a predetermined initial base charging voltage, ii) reducing that predetermined initial base charging voltage in dependence on the discharging and/or charging history of the battery to give an adjusted charging voltage, iii) optionally further adjusting that adjusted base charging voltage in dependence on a current limit and/or the temperature of the battery and iv) applying the adjusted charging voltage, or, if applicable, the further adjusted charging voltage, to the battery, thereby charging the battery.

The battery may be any lead acid battery. The method is particularly applicable to batteries which undergo a significant degree of cycling between states of low charge and high charge, but is not limited to such batteries. Batteries in motive power applications typically experience a high level of cycling but some reserve power applications also involve high levels of cycling. Optionally, the battery is a battery used in a motive power application.

The battery may be, for example, a flooded lead acid battery or a valve regulated lead acid (VRLA). A VRLA battery may be an absorbed glass matt or gel-type battery. In one embodiment the battery is a thin plate pure lead (TPPL) lead acid battery. Such TPPL batteries are well known to the skilled person and have plates of a particular alloy having a very high lead content and which have significant advantages in terms of corrosion resistance and higher power and energy density and lower internal resistance over plates made from conventional alloys. TPPL batteries generally have grids having a thickness of 1.50 millimetres or less.

TPPL batteries have until recently been used mainly in reserve power applications but over recent years advances in design have increased the cycling performance to the point where they now find application in motive power applications. For example, the EnerSys XFC battery is a TPPL battery aimed at motive power applications such as pallet trucks and the like. TPPL batteries have the advantages that they a) do not require topping up of electrolyte, b) they can be charged more quickly than flooded batteries, for example, in 2 to 4 hours rather than 8 hours, c) they give high power and energy density, d) they charge efficiently, and e) they have lower internal resistance. TPPL battery designs are also available with a high degree of vibration resistance which is, of course, an advantage for motive power applications.

The charging apparatus for use in the method of the invention will involve means to obtain information relating to the discharging and/or charging history of the battery and a control means arranged to control a voltage applied to the battery during charging of the battery in dependence on that information relating to the discharging and/or charging history of the battery. The apparatus for charging may, for example, include means to identify each particular battery and to measure and record the amount of charge (i.e. the product of the current and the time) supplied to that battery during each charging phase of that battery and to record a total of that supplied charge.

Preferably, the battery comprises at least one sensor capable of producing information relating to the discharging and/or charging history of the battery and a memory store for recording that information. The sensor optionally senses at least one parameter relating to the discharging and/or charging history of the battery, for example, the current flow into and/or out of the battery. The sensor may, for example, be a Hall effect current sensor or preferably a shunt. Preferably, the apparatus for charging comprises communication means arranged to communicate with the battery and thereby obtain the information relating to the discharging and/or charging history of the battery. The communication means may be a wired communication means. The communication means is advantageously a wireless communication apparatus arranged to wirelessly communicate with the monitoring and recording unit on the battery which monitors and records the information relating to the discharging and/or charging history of the battery. Batteries having such units for sensing and recording parameters such as the total charge supplied to the battery and/or the total charge discharged from the battery, the temperature of the battery and the electrolyte level of the battery are available from EnerSys Incorporated under the trade name WI-IQ. When the battery is taken to a charging apparatus the information is transferred wirelessly to the charging apparatus using a wireless communication protocol.

The control means of the charging apparatus preferably includes a microprocessor and a memory store which stores instructions for the microprocessor for selecting the voltage to be applied to the battery during charging in at least partial dependence of the information relating to the discharging and/or charging history of the battery. Those instructions will preferably be in the form of an algorithm. For example, the instructions may be in the form of an algorithm which selects the voltage to be applied to the battery in dependence on at least:
1) the information relating to the discharging and/or charging history of the battery, and
2) the temperature of the battery.

The charging system is optionally a constant voltage charging system. The charging system is optionally a hybrid charging system.

The energy storage and supply apparatus of the invention includes one or more lead acid batteries and a charging apparatus as described above. The energy storage and supply apparatus may be, for example, a plurality of motive power batteries and one or more charging apparatus as described above.

In a particular embodiment, the invention provides a method of operating a lead acid battery in which the battery undergoes in cyclical fashion discharge phases during which the battery is discharged and charging phases during which the battery is charged and in which the method involves monitoring and recording information relating to the total charge supplied to or discharged from the battery and, during charging of the battery, connecting the battery to a charging apparatus and applying a voltage to the battery in which the voltage is adjusted in dependence on a) the total charge previously supplied to or discharged from the battery, and b) the temperature of the battery.

The invention also provides in a further embodiment an energy storage and supply apparatus comprising a plurality of lead acid batteries, each battery being provided with sensing and recording means for sensing and recording the total charge supplied to the battery and/or discharged from the battery, the apparatus further comprising a charging apparatus for charging the batteries comprising control means arranged to control the voltage supplied to each battery during charging of that battery in dependence on a) the total charge supplied to the battery during previous charging or the total charge discharged from the battery during previous operation of the battery, and b) the temperature of the battery, and the apparatus further comprising communication means for wirelessly communicating the information relating to the temperature and total charge supplied to and/or discharged from the sensing and recording means of each the battery to the control means of the charging apparatus.

The energy storage and supply apparatus may be arranged to at least partially discharge the battery or batteries during an operating phase in which the battery or batteries are not connected to the charging station and to at least partially charge the batteries in a charging phase in which the battery or batteries are connected to the charging apparatus.

An embodiment of the invention will now be described for the purposes of illustration only, with reference to the figures in which:
- Figure 1: shows an illustrative plot of current against time during the charging of a lead acid battery;
- Figure 2: shows an example of a plot of charging voltage versus total charge supplied to the battery in accordance with the invention;
- Figure 3: shows a plot of charge returned during charging against number of discharge/charge cycles for a lead acid battery on a conventional charging programme and a lead acid battery on a charging programme in accordance the method of the invention;
- Figure 4: illustrates schematically an embodiment of the method of the invention; and
- Figure 5: illustrates schematically an embodiment of the energy storage and supply apparatus of the invention.

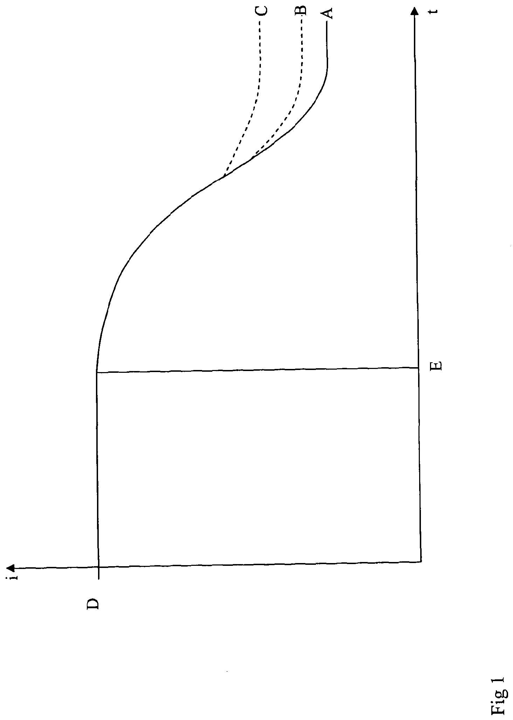

Figure 1 shows a typical profile of current i on the y-axis plotted against time t on the x-axis during the charging of a lead acid battery. The base charging voltage for a lead acid battery will generally be in the region of 2.35 to 2.45 Volts per cell depending on the design of the battery optionally modified to take into account the temperature of a battery. For example, for a thin plate pure lead battery the base charging voltage may be, for example, 2.35 Volts per cell, equating to 14.1 Volts for a six-cell battery. As time goes on and the level of charge in the battery rises there comes a point E where the current flowing into the battery falls below the predetermined limit D. As the battery charges the current continues to fall until towards the end of the charging cycle the current flow levels out as shown in Figure 1. In that Figure solid line A represents the charging profile of a relatively new battery whilst broken lines B and C represent the charging profile of the same battery in the middle and toward the end, respectively, of its working lifetime. As can be seen in Figure 1, the current at the end of the charge cycle increases as the battery ages.

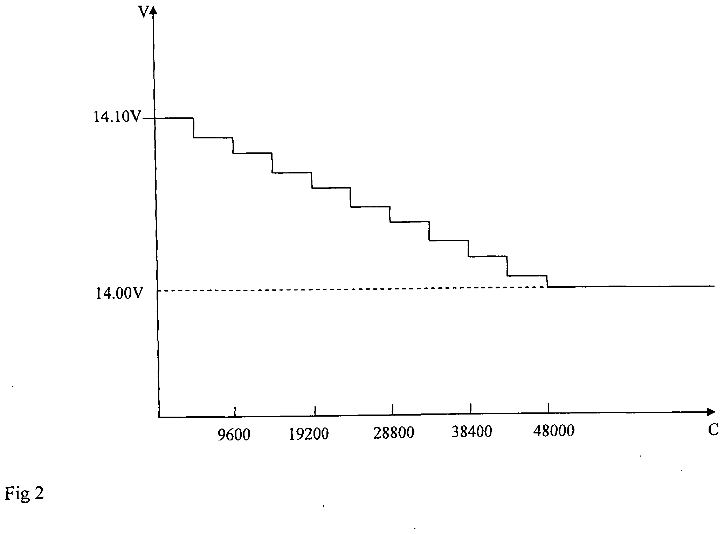

Figure 2 shows an example of a profile of the charging voltage applied to a battery in accordance with the method of the invention. The voltage applied to the battery during charging (ignoring any adjustments made to take account of battery temperature and other factors) starts at an initial predetermined value of 14.1 Volts corresponding to 2. 35 Volts per cell for a 6 cell battery. The battery is designed by the manufacturer to have a charge capacity of 100 Amp hours and to have a specified lifetime of 600 cycles at 80% depth-of-discharge. Accordingly, the total energy capacity specified for the battery is 48,000 Amp hours. In Figure 2 the total charge C supplied to the battery during charging is shown on the X axis. As depicted in Figure 2, the voltage applied during charging is reduced stepwise at regular intervals of 4,800 Amp hours during the lifetime of the battery and eventually reaches 14.0 Volts at a total charge supplied during charging of 48,000 Amp hours, corresponding to 100% of the specified life of the battery. Any further charging is carried out at that and no further reductions apply. Optionally, further reductions to the charging voltage could be made, if desired, at total charges greater than the specified total energy capacity of the battery as long as the voltage does not fall lower than that required to charge the battery in a workable time.

In a preferred embodiment, the stepwise reductions in charging voltage occur more frequently, and involve larger reductions in voltage, as the battery ages, so that more frequent and larger reductions are applied in the later part of the battery's lifetime.

### Example

A thin plate pure lead battery (XFC, available from EnerSys) was subjected to cyclical discharge phases, in which the battery was discharged at a fixed current for a set period of time calculated to give an 80% depth-of-discharge, and charging phases in which a charging voltage of 2.40 Volts per cell was applied to the battery subject to a current limit of 75 Amps. The amount of charge returned to the battery during each charge phase was monitored and recorded.

The experiment was repeated using an identical battery and identical conditions but the charging voltage was decreased by 10 millivolts per cell every 50 cycles.

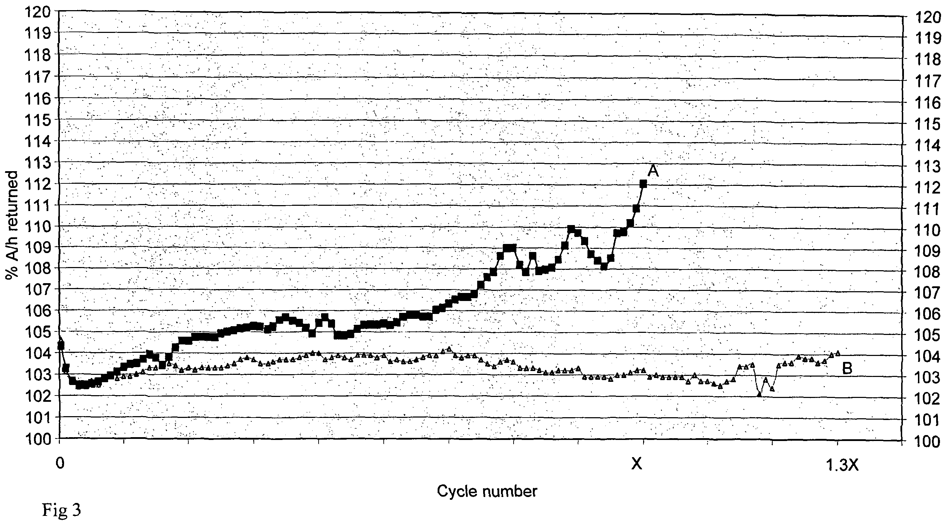

Figure 3 shows the results as a plot of on the y-axis the charge returned to the battery during each charge phase as a percentage of the nominal charge discharged from the battery during a discharge phase and on the x-axis the number of cycles. Line A shows the results for the battery on a constant 2.40 Volts per cell charging voltage and line B shows the results for the battery which was charged at a charge voltage which was initially 2.40 Volts per cell and which dropped by 10 millivolts per cell every 50 cycles. As can be seen from Figure 3, in the first 20 or so cycles both lines drop showing a small initial increase in the charging efficiency of the battery. However, after that point line A progressively increases showing that the amount of charge required to charge the battery on the fixed charge voltage increased as the number of cycles experienced by the battery increased, which is indicative of an increase in level of side reactions leading to eventual failure of the battery of X cycles. In contrast, line B remains essentially constant at a level of 103 to 104% charge return indicating that the level of side reactions occurring during the charge is substantially reduced as compared to the other battery. Moreover, line B extends to 1.3X cycles showing that that battery which experiences a progressive reduction in voltage during charging has the potential for an extended lifetime as compared to the other battery which experienced a constant charging voltage.

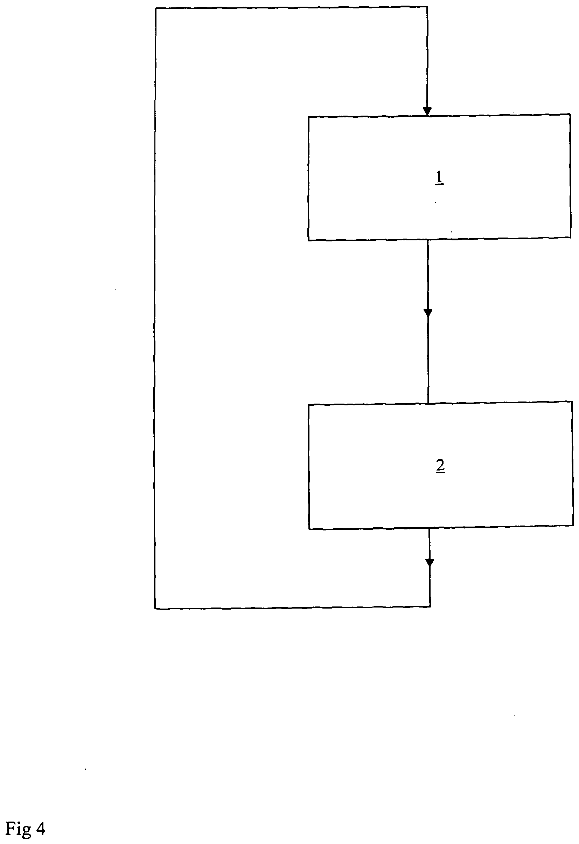

Figure 4 illustrates schematically an embodiment of the method of the invention. A lead acid battery, for example, a battery on a fork-lift truck, when newly manufactured and purchased by the operator is connected to the fork-lift truck for the first time and is then discharged in a discharging phase 1 through use of the truck over, say, a standard 8 hour shift. At the end of the discharging phase 1, the battery is partially or fully discharged and is connected by the operator to a charging apparatus. The charging apparatus then charges the battery during a charging phase 2.

When the battery is substantially fully recharged, for example, after being recharged overnight, it is disconnected from the charging apparatus and is used again in another discharging phase 1. The cyclic pattern of discharging phases 1 and charging phases 2 continues through the lifetime of the battery, until the battery's capacity to hold charge drops to an unacceptable level and the battery is discarded.

During the charging phase 2 the charging apparatus applies to the battery a voltage which is selected based at least in part on the discharging and/or recharging history of the battery, for example, the number of discharging phases 1 which the battery has experienced in its lifetime, or the total amount of charge expended from the battery during discharge phases 1 over its lifetime, or the total amount of charge provided to the battery during charging phases 2 over its lifetime. The voltage applied may also be influenced by other factors, for example, the temperature of the battery.

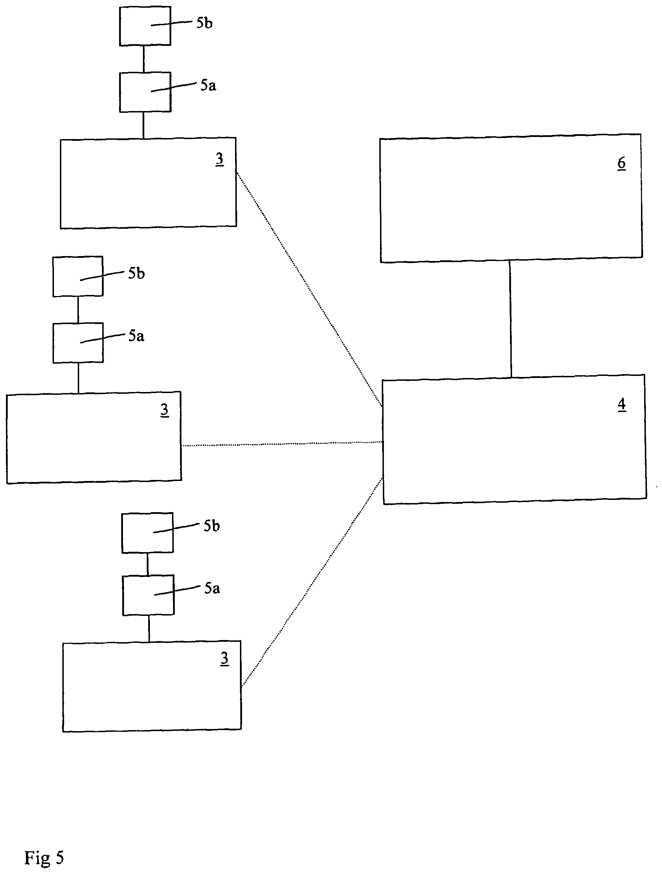

Figure 5 illustrates an embodiment of the energy storage and supply apparatus of the invention. Three lead-acid batteries 3 are connected via electrical cables to a charging apparatus 4. The dotted lines shown in Figure 5 denote that the batteries 3 are connected to the charging apparatus 4 only during charging phases, and are disconnected during discharging phases when the batteries are being used, for example, to power trucks. Each battery 3 is provided with a monitoring and recording unit 5a, 5b, which includes a sensor 5a for monitoring the current flow over time into and out of the battery and a memory 5b for recording and storing information relating to that current flow, for example, the total amount of charge supplied to or discharged from the battery over its lifetime, or the number of times the battery has been charged. The memory 5b may also store a code identifying each individual battery 3.

The charger 4 includes a controller 6 which is arranged to obtain from each of the batteries 3 information stored in the memories 5b which relates to the charging and/or discharging history of each battery 3. For example, the controller 6 may be arranged to obtain information relating to the total charge supplied to and/or from each battery 3 over its lifetime, or the number of times it has been discharged and/or charged. The controller 6 also obtains from the memories 5b the code identifying each battery. The controller 6, which may for example, be a microprocessor arranged to operate according to an algorithm, is arranged to select a voltage to be applied to each battery 3 in dependence upon that information, thereby charging the battery 3.

The information may be communicated from the batteries 3 to the controller 6 of the charging apparatus 4 either via a cable connection or, more preferably, by a wireless communicator. Each battery 3 may also include a temperature sensor, and the controller may be arranged to also take that temperature into account when selecting the voltage to be applied to the battery 3.

While the foregoing is directed to embodiments of the present invention, other and further embodiments may be devised without departing from the basic scope thereof, and the scope thereof is determined by the claims that follow.

## Claims

1. A method of charging a lead acid battery (3) comprising the steps of
a) connecting the battery to a charging apparatus (4);
b) obtaining information relating to the discharging and/or charging history of the battery;
c) applying to the battery a voltage wherein the
voltage is adjusted in dependence on the information relating to the discharging and/or charging history of the battery;
wherein the information relating to the discharging and/or charging history of the battery is the total charge discharged from the battery over the lifetime of the battery or the total charge supplied to the battery during charging over the lifetime of the battery;
**characterised in that**
the voltage is adjusted such that the voltage applied to the battery during charging phases progressively reduces over the lifetime of the battery.

2. A method of operating a lead acid battery in which the battery undergoes discharging phases during which the battery is discharged (1) and charging phases (2) during which the battery is charged and which involves:
a) monitoring and recording information relating to the discharging and/or charging history of the battery;
b) during a charging phase, charging the battery according to the method as claimed in claim 1.

3. A method as claimed in claim 1 or 2 in which the information relates to at least one parameter relating to the discharging and/or charging history of the battery, and the voltage applied to the battery is adjusted such that it reduces stepwise at predetermined values of the parameter.

4. A method as claimed in any of claims 1 to 3 in which the information relating to the discharging and/or charging history of the battery is the total charge supplied to the battery during charging.

5. A method as claimed in any one of claims 1 to 4 which also involves measuring the temperature of the battery during the charging of the battery and adjusting the voltage applied to the battery in dependence on that temperature.

6. A method as claimed in any one of claims 1 to 5 in which the battery is a thin plate pure lead (TPPL) battery.

7. A method as claimed in any one of claims 1 to 6 in which the voltage applied to the battery is determined automatically by a microprocessor operating an algorithm which selects the voltage to be applied to the battery in dependence on at least
i) the information relating to the discharging and/or charging history of the battery, and
ii) the temperature of the battery.

8. A charging apparatus (4) for charging a lead acid battery (3) comprising:
a) communication means (5a, 5b) arranged to obtain information relating to the discharging and/or charging history of the battery; and
b) control means (6) arranged to control a voltage applied to the battery during charging of the battery in dependence on the information relating to the discharging and/or charging history of the battery;
wherein the information relating to the discharging and/or charging history of the battery is the total charge discharged from the battery over the lifetime of the battery or the total charge supplied to the battery during charging over the lifetime of the battery;
**characterised in that**
the voltage is adjusted such that the voltage applied to the battery during charging phases progressively reduces over the lifetime of the battery.

9. An apparatus as claimed in claim 8 in which the communication means is arranged to communicate with the battery and thereby obtain the information relating to the discharging and/or charging history of the battery.

10. An apparatus as claimed in claim 9 in which the communication means is a wireless communication apparatus arranged to wirelessly communicate with a monitoring and recording unit on the battery which monitors and records the information relating the discharging and/or charging of the battery.

11. An apparatus as claimed in any of claims 8 to 10 in which the control means includes a microprocessor and a memory store which stores instructions for the microprocessor for selecting the voltage to be applied to the battery during charging in dependence on the information relating to the discharging and/or charging history of the battery.

12. An apparatus as claimed in any of claims 8 to 11 which is a charging station for charging lead acid batteries in motive power applications.

13. An energy storage and supply apparatus comprising:
one or more lead acid batteries (3);
means to monitor and record information relating to the discharging and/or charging history of the or each battery; and
a charging apparatus (4) as claimed in any of claims 8 to 12.

## Patentansprüche

1. Verfahren zum Laden einer Bleisäurebatterie (3) mit den Schritten:
a) Verbinden der Batterie mit einem Ladegerät (4);
b) Erhalten von Information in Bezug auf die Entlade- und/oder Ladehistorie der Batterie;
c) Anlegen einer Spannung an die Batterie, bei dem die Spannung in Abhängigkeit von der Information in Bezug auf die Entlade- und/oder Ladehistorie der Batterie angepasst wird;
bei dem die Information in Bezug auf die Entlade- und/oder Ladehistorie der Batterie die Gesamtladung, die von der Batterie über die Lebensdauer der Batterie entladen wird, oder die Gesamtladung, die der Batterie während Ladens über die Lebensdauer der Batterie zugeführt wird, ist;
**dadurch gekennzeichnet, dass**
die Spannung derart angepasst wird, dass sich die Spannung, die an die Batterie während Ladephasen angelegt wird, über die Lebensdauer der Batterie progressiv reduziert.

2. Verfahren zum Betreiben einer Bleisäurebatterie, bei dem die Batterie Entladephasen, während derer die Batterie entladen wird (1), und Ladephasen (2), während derer die Batterie geladen wird, durchmacht, und das umfasst:
a) Überwachen und Aufzeichnen von Information in Bezug auf die Entlade- und/oder Ladehistorie der Batterie;
b) während einer Ladephase, Laden der Batterie nach dem Verfahren, wie in Anspruch 1 beansprucht.

3. Verfahren, wie in Anspruch 1 oder 2 beansprucht, bei dem die Information auf mindestens einen Parameter in Bezug auf die Entlade- und/oder Ladehistorie der Batterie bezogen ist, und die Spannung, die an die Batterie angelegt wird, derart angepasst wird, dass sie sich bei vorbestimmten Werten des Parameters schrittweise reduziert.

4. Verfahren, wie in einem der Ansprüche 1 bis 3 beansprucht, bei dem die Information in Bezug auf die Entlade- und/oder Ladehistorie der Batterie die Gesamtladung, die der Batterie während Ladens zugeführt wird, ist.

5. Verfahren, wie in einem der Ansprüche 1 bis 4 beansprucht, das auch ein Messen der Temperatur der Batterie während des Ladens der Batterie und ein Anpassen der Spannung, die an die Batterie angelegt wird, in Abhängigkeit von jener Temperatur umfasst.

6. Verfahren, wie in einem der Ansprüche 1 bis 5 beansprucht, bei dem die Batterie eine Dünnplatten-Reinblei-(TPPL-)Batterie ist.

7. Verfahren, wie in einem der Ansprüche 1 bis 6 beansprucht, bei dem die Spannung, die an die Batterie angelegt wird, durch einen Mikroprozessor, der einen Algorithmus verarbeitet, der die an die Batterie anzulegende Spannung in Abhängigkeit von zumindest
i) der Information in Bezug auf die Entlade- und/oder Ladehistorie der Batterie, und
ii) der Temperatur der Batterie
auswählt, automatisch bestimmt wird.

8. Ladegerät (4) zum Laden einer Bleisäurebatterie (3) mit:
a) einem Kommunikationsmittel (5a, 5b), das so angeordnet ist, dass es eine Information in Bezug auf die Entlade- und/oder Ladehistorie der Batterie erhält; und
b) einem Steuerungsmittel (6), das so angeordnet ist, dass es eine Spannung, die an die Batterie während Ladens der Batterie angelegt wird, in Abhängigkeit von der Information in Bezug auf die Entlade- und/oder Ladehistorie der Batterie steuert;
bei dem die Information in Bezug auf die Entlade- und/oder Ladehistorie der Batterie die Gesamtladung, die von der Batterie über die Lebensdauer der Batterie entladen wird, oder die Gesamtladung, die der Batterie während Ladens über die Lebensdauer der Batterie zugeführt wird, ist;
**dadurch gekennzeichnet, dass**
die Spannung derart angepasst wird, dass sich die Spannung, die an die Batterie während Ladephasen angelegt wird, über die Lebensdauer der Batterie progressiv reduziert.

9. Gerät, wie in Anspruch 8 beansprucht, bei dem das Kommunikationsmittel so angeordnet ist, dass es mit der Batterie kommuniziert und dadurch die Information in Bezug auf die Entlade- und/oder Ladehistorie der Batterie erhält.

10. Gerät, wie in Anspruch 9 beansprucht, bei dem das Kommunikationsmittel ein drahtloses Kommunikationsgerät ist, das so angeordnet ist, dass es mit einer Überwachungs- und Aufzeichnungseinheit auf der Batterie, die die Information in Bezug auf das Entladen und/oder Laden der Batterie überwacht und aufzeichnet, drahtlos kommuniziert.

11. Gerät, wie in einem der Ansprüche 8 bis 10 beansprucht, bei dem das Steuerungsmittel einen Mikroprozessor und einen Speicher, der Anweisungen für den Mikroprozessor zum Auswählen der an die Batterie während Ladens anzulegenden Spannung in Abhängigkeit von der Information in Bezug auf die Entlade- und/oder Ladehistorie der Batterie speichert, aufweist.

12. Gerät, wie in einem der Ansprüche 8 bis 11 beansprucht, das eine Ladestation zum Laden von Bleisäurebatterien bei Triebkraftanwendungen ist.

13. Energiespeicher- und -zufuhrgerät mit:
einer oder mehr Bleisäurebatterien (3);
einem Mittel zum Überwachen und Aufzeichnen von Information in Bezug auf die Entlade- und/oder Ladehistorie der oder jeder Batterie; und
einem Ladegerät (4), wie in einem der Ansprüche 8 bis 12 beansprucht.

## Revendications

1. Procédé destiné à charger une batterie plomb - acide (3), comprenant les étapes suivantes :
a) connecter la batterie à un appareil de charge (4) ;
b) obtenir des informations qui se rapportent à l'historique de décharge et / ou de charge de la batterie ;
c) appliquer une tension à la batterie,
où la tension est réglée selon les informations qui se rapportent à l'historique de décharge et / ou de charge de la batterie ;
où les informations qui se rapportent à l'historique de décharge et /ou de charge de la batterie, représentent la charge totale déchargée de la batterie au cours de la durée de vie de la batterie ou la charge totale fournie à la batterie pendant sa charge au cours de la durée de vie de la batterie ;
**caractérisé en ce que**
la tension est réglée de telle sorte que la tension appliquée à la batterie au cours des phases de charge diminue progressivement au cours de la durée de vie de la batterie.

2. Procédé destiné à actionner une batterie plomb - acid dans lequel la batterie subit des phases de décharge au cours desquelles la batterie est déchargée (1) et des phases de charge (2) au cours desquelles la batterie est chargée, et qui implique les étapes suivantes :
a) surveiller et enregistrer des informations qui se rapportent à l'historique de décharge et / ou de charge de la batterie ;
b) au cours d'une phase de charge, charger la batterie selon le procédé selon la revendication 1.

3. Procédé selon la revendication 1 ou 2 dans lequel les informations concernent au moins un paramètre qui se rapporte à l'historique de décharge et / ou de charge de la batterie, et la tension appliquée à la batterie est réglée de telle sorte qu'elle diminue par paliers selon des valeurs prédéterminées du paramètre.

4. Procédé selon l'une quelconque des revendications 1 à 3 dans lequel les informations qui se rapportent à l'historique de décharge et / ou de charge de la batterie représentent la charge totale fournie à la batterie au cours de sa charge.

5. Procédé selon l'une quelconque des revendications 1 à 4 qui implique également une étape consistant à mesurer la température de la batterie au cours de sa charge et à régler la tension appliquée à la batterie en fonction de cette température.

6. Procédé selon l'une quelconque des revendications 1 à 5 dans lequel la batterie est une batterie à plaques minces en plomb pur (TPPL).

7. Procédé selon l'une quelconque des revendications 1 à 6 dans lequel la tension appliquée à la batterie est déterminée automatiquement par un microprocesseur qui met en œuvre un algorithme qui sélectionne la tension à appliquer à la batterie en fonction d'au moins
i) les informations qui se rapportent à l'historique de décharge et / ou de charge de la batterie, et
ii) la température de la batterie.

8. Appareil de charge (4) destiné à charger une batterie plomb - acide (3), comprenant :
a) des moyens de communication (5a, 5b) agencés pour obtenir des informations qui se rapportent à l'historique de décharge et /ou de charge de la batterie ; et
b) des moyens de commande (6) agencés pour commander la tension appliquée à la batterie au cours de la charge de la batterie en fonction des informations qui se rapportent à l'historique de décharge et / ou de charge de la batterie ;
où les informations qui se rapportent à l'historique de décharge et /ou de charge de la batterie représentent la charge totale déchargée de la batterie au cours de la durée de vie de la batterie ou la charge totale fournie à la batterie pendant sa charge au cours de la durée de vie de la batterie ;
**caractérisé en ce que**
la tension est réglée de telle sorte que la tension appliquée à la batterie au cours des phases de charge diminue progressivement au cours de la durée de vie de la batterie.

9. Appareil selon la revendication 8 dans lequel les moyens de communication sont agencés afin de communiquer avec la batterie et d'obtenir de ce fait les informations qui se rapportent à l'historique de décharge et / ou de charge de la batterie.

10. Appareil selon la revendication 9 dans lequel les moyens de communication sont constitués par un appareil de communication sans fil agencé afin de communiquer sans fil avec une unité de surveillance et d'enregistrement sur la batterie qui surveille et enregistre les informations qui se rapportent à l'historique de décharge et / ou de charge de la batterie.

11. Appareil selon l'une quelconque des revendications 8 à 10 dans lequel les moyens de commande comprennent un microprocesseur et une mémoire de stockage qui stocke des instructions pour que le microprocesseur sélectionne la tension à appliquer à la batterie au cours de la charge selon les informations qui se rapportent à l'historique de décharge et / ou de charge de la batterie.

12. Appareil selon l'une quelconque des revendications 8 à 11 qui est une station de charge destinée à charger des batteries plomb - acide dans des applications d'énergie motrice.

13. Appareil de stockage et de fourniture d'énergie comprenant :
une ou plusieurs batteries plomb - acide (3) ;
des moyens destinés à surveiller et à enregistrer des informations qui se rapportent à l'historique de décharge et / ou de charge de la ou des batteries ; et
un appareil de charge (4) selon l'une quelconque des revendications 8 à 12.
